# EUROPEAN PATENT SPECIFICATION

(11) **EP 1 865 645 B1**
(45) Date of publication and mention of the grant of the patent: **20.01.2010**
(21) Application number: 07109975.8
(22) Date of filing: 11.06.2007
(51) Int. Cl.: H04L 1/00, H04W 48/12

(54) **Method for Transmitting Common Control Information in a Wireless Mobile Communication System**
Verfahren zur Übertragung allgemeiner Steuerinformationen in einem drahtlosen mobilen Kommunikationssystem
Procédé de transmission d'informations de contrôle commun dans un système de communication mobile sans fil

(30) Priority: 09.06.2006 KR 20060051920
(43) Date of publication of application: 12.12.2007
(73) Proprietor: Samsung Electronics Co., Ltd., Suwon-si, Gyeonggi-do (KR)
(72) Inventor: Ju, Hyeong-Jong c/o Samsung Electronics Co., Ltd., Gyeonggi-do (KR); Cho, Min-Hee c/o Samsung Electronics Co., Ltd., Gyeonggi-do (KR); Yang, Jang-Hoon c/o Samsung Electronics Co., Ltd., Gyeonggi-do (KR)
(74) Representative: Grünecker, Kinkeldey, Stockmair & Schwanhäusser Anwaltssozietät

(56) References cited:
- WO-A-02/41520
- US-A1- 2005 117 536
- SAMSUNG ET AL: "Clarification of H-ARQ Operation with Reduced AAS Private Map" IEEE 802.16E BROADBAND WIRELESS ACCESS WORKING GROUP; IEEE C802.16E-05/071R3, [Online] 26 January 2005 (2005-01-26), pages 1-5, XP002450966 Retrieved from the Internet: URL:http://grouper.ieee.org/groups/802/16/ tge/contrib/C80216e-05_071r3.pdf> [retrieved on 2007-09-14]
- T. KWON ET AL: "Design and Implementation of a Simulator Based on a Cross-Layer Protocol between MAC and PHY Layers in a WiBro Compatible IEEE 802.16e OFDMA System" IEEE COMMUNICATIONS MAGAZINE, [Online] December 2005 (2005-12), pages 136-146, XP002450967 Retrieved from the Internet: URL:http://ieeexplore.ieee.org/iel5/35/331 62/01561931.pdf> [retrieved on 2007-09-14]

## Description

### BACKGROUND OF THE INVENTION

### 1. Field of the Invention

The present invention generally relates to a method for managing resources in a wireless mobile communication system. More particularly, the present invention relates to a method for transmitting common control information in a wireless mobile communication system.

### 2. Description of the Related Art

Providing services with diverse Quality of Service (QoS) requirements at or above 100Mbps to users is an active study area for a future-generation communication system, known as a 4^{th} Generation (4G) communication system. Particularly, active research is conducted on providing high-speed service by ensuring mobility and QoS to a Broadband Wireless Access (BWA) communication system such as Wireless Local Area Network (WLAN) and Wireless Metropolitan Area Network (WMAN). A major example of such a system is an Institute of Electrical and Electronics Engineers (IEEE) 802.16 communication system.

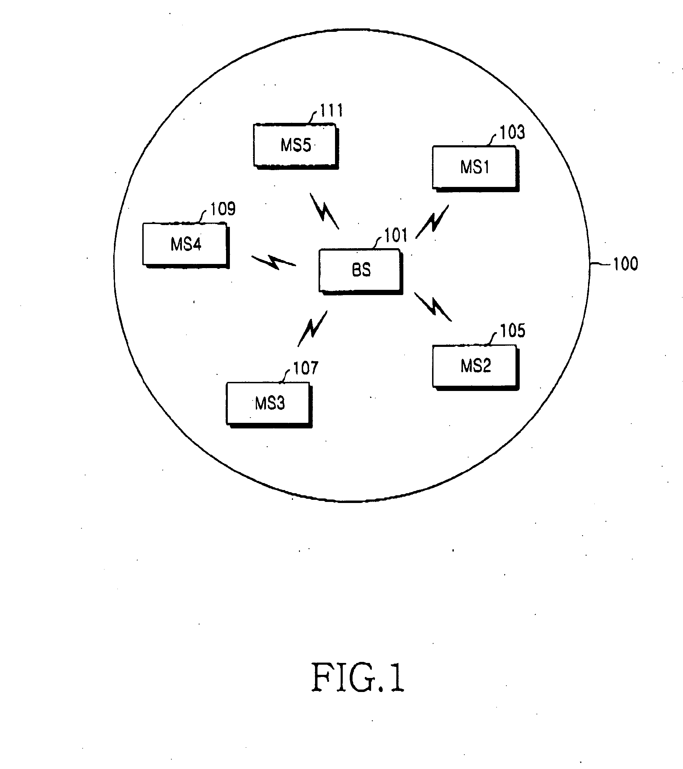

FIG. 1 illustrates a configuration of a typical IEEE 802.16 communication system. The IEEE 802.16 communication system ensures a mobility of Subscriber Stations (SSs) and thus it is deployed in a multi-cell structure. Such cells as illustrated in FIG. 1 are neighboring to one another in the IEEE 802.16 communication system.

Referring to FIG. 1, the communication system includes a Base Station (BS) 101 that covers a cell 100 and a plurality of Mobile Stations (MSs) 103, 105, 107, 109, and 111 (referred to as MS1 to MS5, respectively) that receive a communication service from the BS 101. Signaling can be carried out in Orthogonal Frequency Division Multiplexing (OFDM)/Orthogonal Frequency Division Multiple Access (OFDMA) between the BS 101 and MS1 to MS5.

In the wireless mobile communication system, data is transmitted in frames, each being divided into a MAP area with control information and resource allocation information, a DownLink (DL) burst area, and an UpLink (UL) burst area. The BS transmits the resource allocation information to the MSs by MAP messages, DL-MAP and UL-MAP. The DL-MAP message and the UL-MAP message have the following configurations described in Table 1 and Table 2 below, respectively:

**Table 1**

| Syntax | Size (bits) | Notes |
|---|---|---|
| DL-MAP_Message_Format() { | | |
| Management Message Type=2 | 8 | |
| PHY Synchronization Field | Variable | See appropriate PHY specification |
| DCD Count | 8 | |
| Base Station ID | 48 | |
| Begin PHY Specific Section { | | See applicable PHY subclause |
| if (Wireless MAN-OFDMA) { | | |
| No. OFDMA symbols | 8 | Number of OFDMA symbols in the DL subframe including all AAS/permutation zone |
| } | | |
| for (i=1;i<=n;i++) { | | For each DL-MAP element 1 to n |
| DL-MAP_IE() | variable | See corresponding PHY specification |
| } | | |
| } | | |
| if ! (byte boundary) { | | |
| Padding Nibble | 4 | Padding to reach byte boundary |
| } | | |
| } | | |

**Table 2**

| Syntax | Size (bits) | Notes |
|---|---|---|
| UL-MAP_Message_Format() { | | |
| Management Message Type=3 | 8 | |
| Reserved | 8 | Shall be set to zero |
| UCD Count | 8 | |
| Allocation Start Time | 32 | |
| Begin PHY Specific Section { | | See applicable PHY subclause |
| if (Wireless MAN-OFDMA) { | | |
| No. OFDMA symbols | 8 | Number of OFDMA symbols in the UL subframe |
| } | | |
| for (i=1;i<=n;i++) { | | For each UL-MAP element 1 to n |
| UL-MAP_IE() | variable | See corresponding PHY specification |
| } | | |
| } | | |
| if ! (byte boundary) { | | |
| Padding Nibble | 4 | Padding to reach byte boundary |
| } | | |
| } | | |

The BS transmits DL and UL resource allocation information by the DL-MAP and UL-MAP messages. The MSs detect control information and information about the locations of resources allocated to them by decoding the DL-MAP and UL-MAP messages. Thus, the MSs are capable of transmitting/receiving DL or UL data using the detected information.

During data transmission/reception, the MSs are placed in different channel statuses, i.e. different propagation environments due to obstacles or propagation interference between the BS and the MSs. Therefore, the BS adaptively selects a Modulation and Coding Scheme (MCS) level for each of the MSs, according to the channel status of the MS.

MCS levels are combinations of modulation and coding, and range from level 1 to level N according to the number of available MCSs. MCS levels are adaptively selected according to the channel statuses between the BS and the MSs. In case of a good channel status between the BS and an MS, the BS may select a high MCS level specifying 64-ary Quadrature Amplitude Modulation (64QAM) and a code rate 5/6 for the MS. In case of a poor channel status between the BS and the MS, the BS may select a low MCS level specifying Quadrature Phase Shift Keying (QPSK) and a code rate 1/12 for the MS.

Assuming MS1 103 is in the best channel status and MS5 111 is in the poorest channel status in FIG. 1, the BS 101 selects MCS levels based on channel status information received from MS1 103 and MS5 111 and transmits data encoded and modulated using the selected MCS levels to MS1 103 and MS5 111. MS1 103 and MS5 111 have different resource requirements according to their channel statuses. Hence, the BS 101 allocates required resources to them through MCS level selection. In general, the least resources are allocated to the MS in the best channel status and the most resources to the MS in the poorest channel status.

MAP information including system information and resource allocation information is so significant that MSs must receive the MAP information. That's why the BS 101 transmits the MAP information using the most robust MCS level. For the same amount of information, a lower MCS level requires a larger amount of resources. That is, the MAP information requires the same or more resources in amount, compared to data transmitted to each MS. However, every MS may not need receive the MAP information because a certain MAP IE is destined for a particular MS or some MSs. Consequently, use of a large amount of radio resources for the MAP IE (Information Element) decreases radio resource utilization.

US 2005/0117536 A1 discloses a wireless communication system, wherein a first level MAP message for transmitting a first level information and a second level MAP message for transmitting a second level resource location information is disclosed. According to the document, a base station transmits the first level MAP message at the start of the frame. Further, a mobile station reads said first level MAP message and determines a slot in which it is to receive the second level MAP message.

Samsung et al: "Clarification of H-ARQ Operation with Reduced AAS Private Map", IEEE C802.16e-η5/071r3, pages 1-5, 26-01-2005 discloses a reduced AAS Private Map concatenating MAP and a downlink data burst. The document further discloses applying to coding and modulation to the concatenated burst, which is designed to exploit beam-forming gain and signaling efficiency of bandwidth allocation. Figure 1 of the document further discloses IEs in a normal MAP burst and a private MAP burst in a downlink AAS zone of a frame.

It is the object of the present invention to provide a improved method for transmitting common control information in a broadband wireless access system.

This object is solved by the subject matter of the independent claim. Preferred embodiments are defined in the dependent claims.

An aspect of the present invention is to address at least the problems and/or disadvantages and to provide at least the advantages described below. Accordingly, an aspect of exemplary embodiments of the present invention is to provide a method for efficiently managing radio resources in a wireless mobile communication system.

In accordance with an aspect of the present invention, there is provided a method for transmitting common control information to an MS in a BS in a wireless mobile communication system, in which the BS generates a MAP IE using common control information to be transmitted to the MS, the common control information being resource allocation information and control information, converts the MAP IE to a MAP IE message, applies an MCS level corresponding to the channel status of the MS, and transmits the MAP IE message with data to the MS.

### BRIEF DESCRIPTION OF THE DRAWINGS

The above and other objects, features, and advantages of certain exemplary embodiments of the present invention will be more apparent from the following detailed description taken in conjunction with the accompanying drawings, in which:
FIG. 1 illustrates the configuration of a typical IEEE 802.16 communication system;
FIG. 2 illustrates the format of a Medium Access Control (MAC) management message in a wireless mobile communication system according to the present invention;
FIG. 3 is a flowchart illustrating a MAP IE transmission operation in a BS according to the present invention;
FIG. 4 is a flowchart illustrating a MAP IE reception operation in an MS according to present invention; and
FIGs. 5A and 5B illustrate exemplary data burst structures and MAP IEs according to the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The present invention discloses a method for transmitting MAP information in the form of a message in a wireless mobile communication system. This message is a MAC (Medium Access Control) management message. Transmission of the MAP information in the form of the message requires fewer resources than transmission of the MAP information in a MAP area because the BS converts the MAP information to the message prior to transmission under the assumption that it already has knowledge of the channel status of the MS. The MAP information includes control information and resource allocation information and will be referred to as common control information hereinbelow.

The present invention is applicable to any wireless mobile communication system using a DL-MAP IE and a UL-MAP IE.

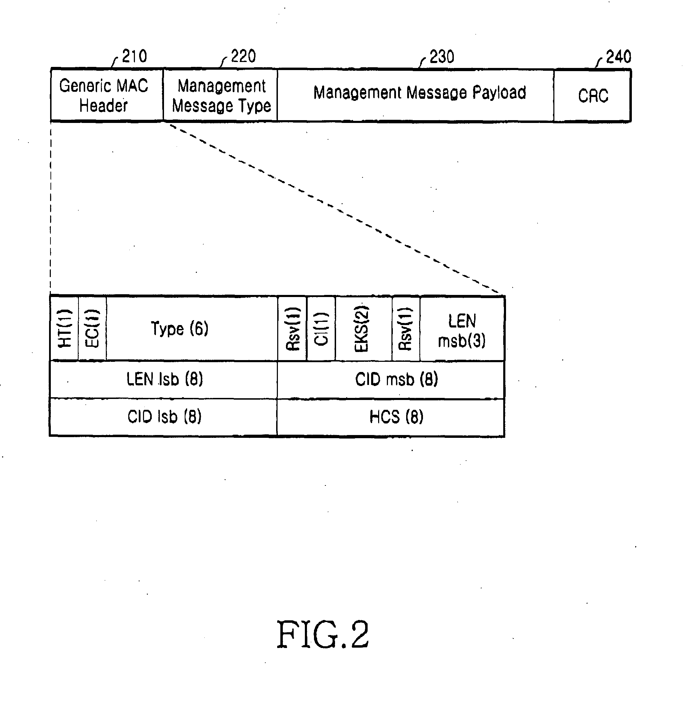

FIG. 2 illustrates the format of a MAC management message in a wireless mobile communication system according to the present invention.

Referring to FIG. 2, a BS exchanges information with an MS through MAC management messages. The MAC management messages each include a 6-byte Generic MAC Header field 210, a 1-byte Management Message Type field 220, a variable-length Management Message Payload 230 field , and a 4-byte Cyclic Redundancy Check (CRC) field 240.

The Generic MAC Header field 210 is composed of a Header Type (HT) field, an Encryption Control (EC) field indicating whether data is encrypted, a Type field indicating whether a subheader exists, a CI (CRC Indicator) field indicating the presence or absence of the CRC field, an Encryption Key Sequence (EKS) field, a Length field indicating the total length of the MAC management message, a Connection IDentifier (CID) field, and a Header Check Sequence (HCS) field for use in checking link errors of the Generic MAC Header 210.

The Management Message Type field 220 contains an ID identifying the usage of a new DL-MAP IE/UL-MAP IE message proposed according to the present invention. These new DL-MAP IE and UL-MAP IE messages are defined in Table 3 below.

**Table 3**

| Type | Message Name | Message Description | Connection |
|---|---|---|---|
| TBD (To Be Determined) | DL-MAP IE Message | Downlink Access Definition | Broadcasting or Basic CID |
| TBD | UL-MAP IE Message | Uplink Access Definition | Broadcasting or Basic CID |

Unlike the conventional MAP information transmission in the MAP area, the DL-MAP IE message and the UL-MAP IE message described in Table 3 are transmitted along with DL data in the present invention. If the DL-MAP IE message and the UL-MAP IE message are directed to one MS, they can be transmitted using a basic CID specific to the MS.

Table 4 and Table 5 illustrate the formats of the DL-MAP IE message and the UL-MAP IE message, respectively.

**Table 4**

| Syntax | Size (bits) | Notes |
|---|---|---|
| DL-MAP-IE_Message_Format() { | | |
| Management Message Type=?? | 8 | |
| for (i=1;i<=n;i++) { | | For each DL-MAP element 1 to n |
| DL-MAP_IE() | variable | See corresponding PHY specification |
| } | | |
| if ! (byte boundary) { | | |
| Padding Nibble | 4 | Padding to reach byte boundary |
| } | | |
| } | | |

Preferably but not necessarily, the length in bytes of the DL-MAP IE message is an integer. If the DL-MAP IE message does not have an integer number of bytes, some bits must be padded in the message and the MS must neglect the padding.

**Table 5**

| Syntax | Size (bits) | Notes |
|---|---|---|
| UL-MAP-IE_Message_Format() { | | |
| Management Message Type=?? | 8 | |
| for (i=1;i<=n;i++) { | | For each UL-MAP element 1 to n |
| UL-MAP_IE() | variable | See corresponding PHY specification |
| } | | |
| if ! (byte boundary) { | | |
| Padding Nibble | 4 | Padding to reach byte boundary |
| } | | |
| } | | |

As with the UL-MAP IE message, preferably but not necessarily, the length in bytes of the UL-MAP IE message is an integer. If the UL-MAP IE message does not have an integer number of bytes, some bits must be padded in the message and the MS must neglect the padding.

When transmitting a particular UL burst IE in the UL-MAP IE message, the BS must notify the MS of the absolute position of the UL burst IE in a UL burst area. It is because the MS cannot receive every UL burst IE in a frame, which means that the MS cannot determine the accurate position of the UL burst IE.

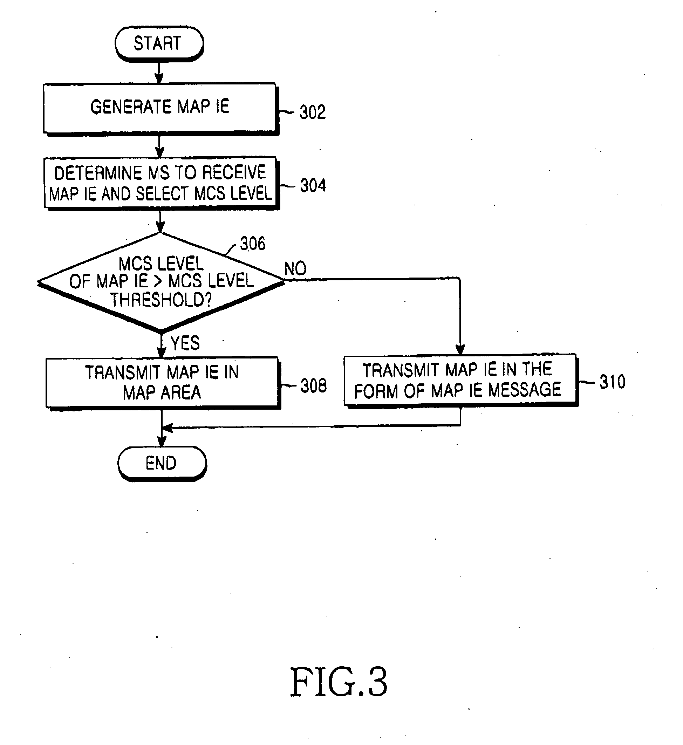

FIG. 3 is a flowchart illustrating a MAP IE transmission operation in a BS according to the present invention.

Referring to FIG. 3, the BS generates a MAP IE in step 302. The MAP IE is a DL-MAP IE or a UL-MAP IE and can be directed to one or more MSs. In step 304, the BS determines an MS to receive the MAP IE, selects an MCS level according to the channel status of the MS, and applies the MCS level to the MAP IE.

In step 306, the BS compares the MCS level of the MAP IE with a predetermined MCS level threshold. If the MCS level of the MAP IE is less than or equal to the MCS level threshold, the BS goes to step 308. If the MCS level of the MAP IE is greater than the MCS level threshold, the BS proceeds to step 310.

In step 308, the BS transmits the MAP IE in the MAP area to the MS. In step 310, the BS converts the MAP IE to a message and transmits the message to the MS.

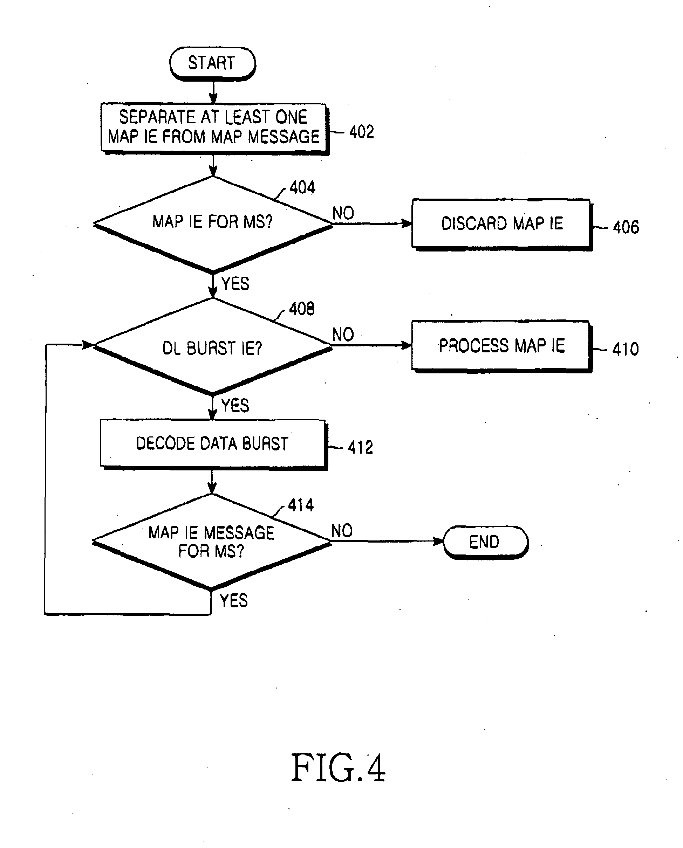

FIG 4 is a flowchart illustrating a MAP IE reception operation in an MS according to the present invention.

Referring to FIG. 4, the MS separates at least one MAP IE from a MAP message received from the BS in step 402. The MAP message is a DL/UL-MAP message or a compressed MAP message with the DL-MAP message and the UL-MAP message in combination. The MAP message may contain at least one MAP IE. In step 404, the MS determines whether it is supposed to receive and process the MAP IE by checking a CID included in the MAP IE. If the CID of the MS is present in the MAP IE, the MS receives and processes the MAP IE. If a broadcasting CID exists instead of the CID in the MAP IE, which means that the MAP IE is directed to all MSs, the MS receives and processes the MAP IE. In this manner, the MS detects a MAP IE to receive and process referring to a CID in the MAP IE. Meanwhile, if the MS determines that it is not supposed to receive and process the MAP IE, it discards the MAP IE in step 406.

In step 408, the MS determines whether the MAP IE to receive and process is a DL burst IE associated with data burst allocation. If the MAP IE is a DL burst IE, the MS goes to step 412. If the MAP IE is not a DL burst IE, the MS processes the MAP IE in step 410. The MS decodes a data burst indicated by the DL burst IE in step 412 and determines whether the data burst includes a MAP IE message proposed by the present invention, i.e. a DL-MAP IE message or a UL-MAP IE message in step 414. To make this determination, the MS checks the CID field of the Generic MAC Header 210 of the MAP IE message. For example, if a broadcasting CID or the ID of the MS is filled in the CID field, the MS processes the MAP IE message. In the presence of the MAP IE message for the MS, the MS returns to step 408 and otherwise, it ends the algorithm of the present invention.

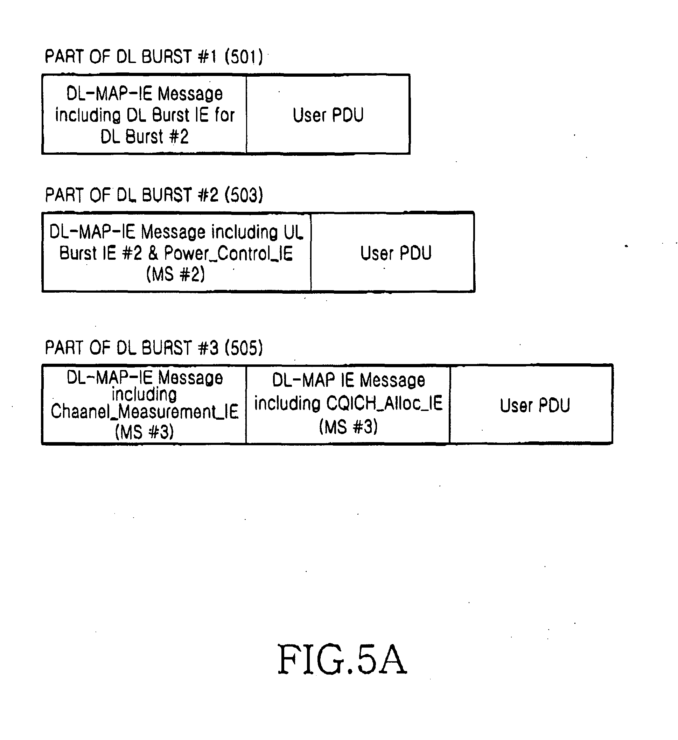

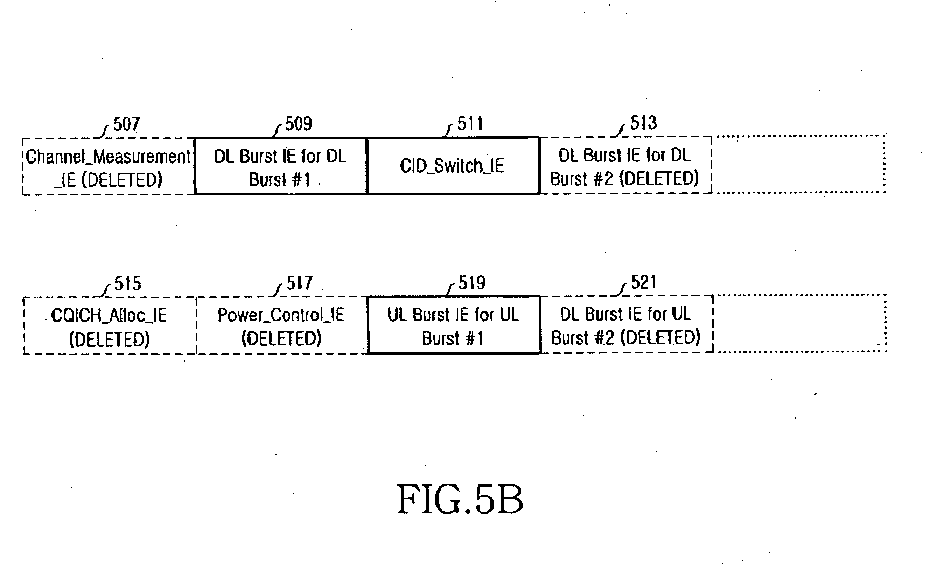

FIGs. 5A and 5B illustrate exemplary data burst structures and MAP IEs according to the present invention.

The BS selects a MAP IE from among a plurality of MAP IEs, for transmission along with a data burst, converts the MAP IE in the form of a message, and transmits the MAP IE message to the MS. Therefore, the same MCS level is applied to both the MAP IE message and the data burst.

Referring to FIG 5A, a first DL burst 501 (DL burst #1) is for MS 1 but includes a DL-MAP IE message with a DL burst IE for MS2. A second DL burst 503 (DL burst #2) is for MS2 and includes a DL-MAP IE message with an UL-Burst_IE and a Power_Control_ IE for MS2.

A third DL burst 505 (DL burst #3) is for MS3. DL burst #3 505 includes a DL-MAP IE message with a Channel Measurement IE for MS3 and a UL-MAP IE message with a Channel Quality Information CHannel (CQICH)_Alloc_IE for MS3.

FIG. 5B illustrates DL-MAP IEs and UL-MAP IEs. Conventionally, all IEs are transmitted in the MAP areas. Thus, a Channel Measurement IE 507, a DL burst IE for DL burst #1 509, a CID_Switch_IE 511, a DL burst IE for DL burst #2 513, a CQICH_Alloc_IE 515, a Power_Control_IE 517, a UL burst IE for UL burst #1 519, and a UL burst IE for UL burst #2 521 are included in MAP messages.

However, in accordance with the present invention, some IEs 507, 513, 515, 517 and 521 are converted to MAC management messages and transmitted in data bursts, as illustrated in FIG. 5A. Therefore, radio resources are efficiently utilized.

For example, MSs decode a DL-MAP message and acquire allocation information about DL burst #1 501. It is assumed herein that DL burst #1 501 is directed to all MSs. Hence, MS2 decodes DL burst #1 501 and is aware that DL burst #1 501 includes a DL-MAP IE message for MS2. Thus, MS2 acquires information with which to decode DL burst #2 503 using the DL-MAP IE message.

MS2 decodes DL burst #2 503 and recognizes that it includes a UL-MAP IE message with a Power_Control_IE 517. MS2 then processes the UL-MAP IE message so as to transmit a UL burst and changes uplink power as indicated by the Power_Control_IE 517.

In the same manner, MS3 processes the DL-MAP message or a DL-MAP IE message included in a data burst. Thus, MS3 decodes DL burst #3 505 and is aware that the DL burst #3 505 includes a DL-MAP IE message with a Channel_Measurement_IE and a UL-MAP IE message with a CQICH_Alloc_IE. Thus, MS3 reports a channel measurement to the BS on a feedback channel indicated by the Channel_Measurement_IE.

In accordance with the present invention as described above, a BS converts MAP IEs to MAC IE messages and transmits them in data bursts, compared to conventional transmission of the MAP IEs in a MAP area. Therefore, while the lowest MCS level is applied to the MAP IEs in the conventional technology, the MAP IE messages are encoded and modulated using MCS levels that are selected according to the channel statuses of MSs. Consequently, radio resources are saved.

While the invention has been shown and described with reference to certain exemplary embodiments of the present invention thereof, it will be understood by those skilled in the art that various changes in form and details may be made therein without departing from the scope of the present invention as defined by the appended claims.

## Claims

1. A method for transmitting common control information to a Mobile Station (103, 105, 107, 109, 111), MS, from a Base Station (101), BS, in a broadband wireless access system, wherein a transmission is structured in frames, said frames being divided into a MAP area and a burst area, the method comprising:
generating (302) a MAP Information Element, IE, using common control information to be transmitted to the MS, the common control information being resource allocation information and control information;
comparing (306) a Modulation and Coding Scheme, MCS, level corresponding to the current channel status of the MS with a system-preset MCS level threshold;
if the current MCS level exceeds said system-preset MCS level threshold, converting (310) the MAP IE into a MAP IE message and
transmitting the MAP IE message inside the burst area to the MS, thereby applying the MCS level corresponding to said current level; and
if the current MCS level does not exceed said system-preset MCS level threshold, transmitting the MAP IE inside the MAP area.

2. The method of claim 1, wherein the MAP IE message includes a broadcasting Connection Identifier ,CID, common to a plurality of MSs.

3. The method of claim 1, wherein the MAP IE message includes a basic CID specific to the MS.

## Patentansprüche

1. Verfahren zum Übertragen gemeinsamer Steuer-Informationen zu einer Mobilstation (103, 105, 107, 109, 111) von einer Basisstation (101) in einem Breiband-Drahtloszugangssystem, wobei eine Übertragung in Rahmen strukturiert ist und die Rahmen in einen MAP-Bereich und einen Burst-Bereich unterteilt sind und das Verfahren umfasst:
Erzeugen (302) eines MAP-Informationselementes unter Verwendung gemeinsamer Steuer-Informationen, das zu der Mobilstation übertragen werden soll, wobei die gemeinsamen Steuer-Informationen Ressourcenzuweisungs-Informationen und Steuer-Informationen sind;
Vergleichen einer MSC-Stufe (Modulation and Coding Scheme level), die dem aktuellen Kanalstatus der Mobilstation entspricht, mit einem vom System voreingestellten MSC-Stufen-Schwellenwert;
wenn die aktuelle MSC-Stufe den von dem System voreingestellten MSC-Stufen-Schwellenwert übersteigt, Umwandeln (310) des MAP-Informationselementes in eine MAP-Informationselement-Nachricht und Übertragen der MAP-Informationselement-Nachricht innerhalb des Burst-Bereiches zu der Mobilstation, um so die MSC-Stufe anzuwenden, die der aktuellen Stufe entspricht; und
wenn die aktuelle MSC-Stufe den vom System voreingestellten MSC-Stufen-Schwellenwert nicht übersteigt, Übertragen des MAP-Informationselementes innerhalb des MAP-Bereiches.

2. Verfahren nach Anspruch 1, wobei die MAP-Informationselement-Nachricht eine Broadcasting-CID (broadcasting Connection identifier) enthält, die einer Vielzahl von Mobilstationen gemeinsam ist.

3. Verfahren nach Anspruch 1, wobei die MAP-Informationselement-Nachricht eine Basis-CID enthält, die spezifisch für die Mobilstation ist.

## Revendications

1. Procédé permettant de transmettre des informations communes de commande à une Station Mobile (103, 105, 107, 109, 111), MS, à partir d'une Station de Base (101), BS, dans un système d'accès sans fil à large bande, dans lequel une transmission est structurée en trames, lesdites trames étant divisées en une zone au protocole MAP et en une zone de paquets, le procédé comprenant :
la génération (302) d'un Élément d'Information au protocole MAP, IE, en utilisant des informations communes de commande à transmettre à la station mobile MS, les informations communes de commande représentant des informations d'allocation de ressources et des informations de commande,
la comparaison (306) d'un niveau de Principe de Modulation et de Codage, MCS, correspondant à l'état actuel du canal de la station mobile MS avec un seuil de niveau du principe MCS préréglé par le système,
si le niveau actuel du principe MCS dépasse ledit seuil de niveau du principe MCS préréglé par le système,
la conversion (310) de l'élément d'information IE au protocole MAP en un message d'élément d'information IE au protocole MAP, et
la transmission du message d'élément d'information IE au protocole MAP à l'intérieur de la zone de paquets vers la station mobile, ce qui applique de ce fait un niveau du principe MCS correspondant au dit niveau actuel, et
si le niveau actuel du principe MCS ne dépasse pas ledit seuil de niveau du principe MCS préréglé par le système,
la transmission de l'élément d'information IE au protocole MAP à l'intérieur de la zone au protocole MAP.

2. Procédé selon la revendication 1, dans lequel le message d'élément d'information IE au protocole MAP inclut un identificateur de connexion de diffusion, CID, commun à une pluralité de stations mobiles MS.

3. Procédé selon la revendication 1, dans lequel le message d'élément d'information IE au protocole MAP inclut un identificateur CID de base spécifique à la station mobile MS.
